(19) Europäisches Patentamt
European Patent Office
Office européen des brevets

(11) Publication number: **0 343 262 B1**

# (12) EUROPEAN PATENT SPECIFICATION

(45) Date of publication of patent specification: **17.03.93**

(51) Int. Cl.5: **C09B 62/507**, C09B 62/08, D06P 1/38

(21) Application number: **88108199.6**

(22) Date of filing: **21.05.88**

The file contains technical information submitted after the application was filed and not included in this specification

(54) **Fibre-reactive azo dyes, process for their preparation and their use for dyeing hydroxy- and/or carboxamide groups containing fibre-material.**

(43) Date of publication of application:
**29.11.89 Bulletin 89/48**

(45) Publication of the grant of the patent:
**17.03.93 Bulletin 93/11**

(84) Designated Contracting States:
**BE CH DE FR GB LI**

(56) References cited:
**EP-A- 0 073 481**
**EP-A- 0 111 830**
**EP-A- 0 242 850**
**EP-A- 0 111 288**
**EP-A- 0 128 340**
**DE-A- 1 943 904**

(73) Proprietor: **HOECHST CELANESE CORPORATION**
**Route 202-206 North**
**Somerville, N.J. 08876(US)**

(72) Inventor: **Phillips, Thomas S.**
**62 West Warwick Avenue**
**West Warwick, RI 02893(US)**
Inventor: **Corso, Anthony J.**
**5 Crocus Court**
**Coventry, RI 02816(US)**

(74) Representative: **Tergau, Ulrich, Dr. et al**
**HOECHST AKTIENGESELLSCHAFT Zentrale**
**Patentabteilung Postfach 80 03 20**
**W-6230 Frankfurt am Main 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.5x/3.0.1)

## Description

This invention is in the field of fiber reactive dyestuffs. Azo dyestuffs which contain, as the diazo component, a naphthylamine substituted by a sulfo group and by a fibre-reactive group of the vinylsulfone series, are already known; inter alia, as such a diazo component, the 2-amino-8-sulfo-6-($\beta$-sulfatoethylsulfonyl)-naphthalene is mentioned. A particular monoazo dyestuff having said diazo component and having, as the coupling component, the 2,5-dimethyl-aniline is described in Example 9 of the EP-A-0,242,850. Disazo dyestuffs which contain said 2-amino-6-($\beta$-sulfatoethylsulfonyl)-naphthalene-8-sulfonic acid as the diazo component are also described, namely in DE-A- 3,318,146 and in the Japanese Patent Application Publication Sho-58-160362 and Sho-164645.

Furthermore, DE-A- 1,943,904 describes monoazo dyestuffs having a naphthylamino diazo component substituted by a sulfo group and a fibre-reactive group of the vinylsulfone series; however, neither a monoazo or disazo dyestuff with a 2-amino-8-sulfo-6-($\beta$-sulfatoethylsulfonyl)-naphthalene diazo component nor that particular aminonaphthalene is described, respectively mentioned therein.

Monoazo dyestuffs of that type containing additionally a chloro-s-triazinylamino grouping in the naphthol coupling component, are disclosed with the EP-A-0,111,288 and 0,111,830. None of these two prior art publications mentions or discloses azo dyestuffs having the above-said particular diazo component, or mentions this particular disazo component per se, but merely the isomeric derivatives of it.

Fibre-reactive mono- and disazo dyestuffs of particular chemical structure have now been found which contain said diazo component and which have very good dye properties, especially when used in combination with other dyes, i.e. in a dichromatic and trichromatic dyeing procedure.

The instant invention thus provides new monoazo and disazo dyestuffs which correspond to the general formulae (1a) and (1b), defined below, as well as their 1:1-copper complex, 1:2-cobalt complex and 1:2-chromium complex derivatives:

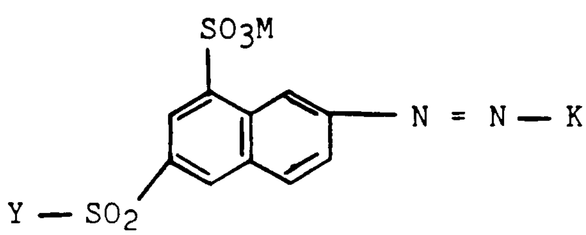

(1a)

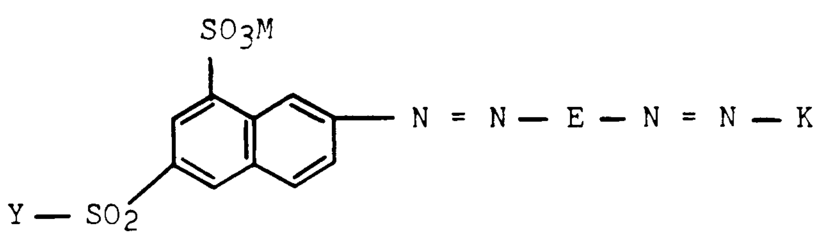

(1b)

The formula members M, Y, E and K have the following meanings:

- M is hydrogen or an alkali metal, such as sodium, potassium and lithium;
- Y is vinyl or is an ethyl substituted in the $\beta$-position by an organic or inorganic substituent which is capable of being split off by means of an alkali, such as sodium hydroxide;
- E is 1,4-phenylene or 1,4-naphthylene optionally substituted with one or two substituents independently selected from chloro, fluoro, bromo, sulfo, carboxy, alkoxy of 1 to 4 carbon atoms, alkyl of 1 to 4 carbon atoms, benzoylamino, sulfobenzoylamino, alkanoylamino of 2 to 5 carbon atoms and ureido, or E is 2,6- or 2,7-naphthylene substituted in the 1-position by hydroxy and substituted by 1 or 2 sulfo groups;
- K is a group according to one of the general formulae (2a), (2b), (2c), (2e), (2f) and (2g), defined below:

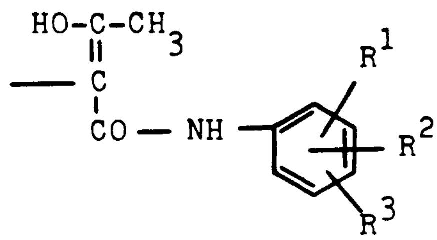

(2a)

wherein

| | |
|---|---|
| $R^1$ | is hydroxy, chloro, bromo, alkyl of 1 to 4 carbon atoms, alkoxy of 1 to 4 carbon atoms, sulfo or a group $-SO_2-Y$ wherein Y has one of the above meanings, |
| $R^2$ | is chloro, alkyl of 1 to 4 carbon atoms, alkoxy of 1 to 4 carbon atoms or sulfo, and |
| $R^3$ | is chloro, alkyl of 1 to 4 carbon atoms, alkoxy of 1 to 4 carbon atoms or sulfo, |
| $R^1$, $R^2$ and $R^3$ | having meanings which may be identical to or different from one another; |

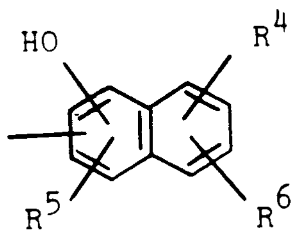

(2b)

wherein

the free bond is in the ortho-position relative to the hydroxy group,

| | |
|---|---|
| $R^4$ | is hydrogen, alkyl of 1 to 4 carbon atoms, alkoxy of 1 to 4 carbon atoms, sulfo, amino, hydroxy, benzoylamino, sulfobenzoylamino, alkanoylamino of 2 to 5 carbon atoms, N-alkylamino of 1 to 4 carbon atoms or 3-phenylamino-5-chloro-s-triazin-1-yl-amino, the benzene moiety in the latter group being optionally substituted by sulfo, carboxy, chloro, methyl, ethyl, methoxy, ethoxy and/or nitro, preferably at least by a sulfo group, |
| $R^5$ | is hydrogen or sulfo and |
| $R^6$ | is hydrogen or sulfo, |
| $R^4$, $R^5$ and $R^6$ | having meanings which are identical to or different from another; |

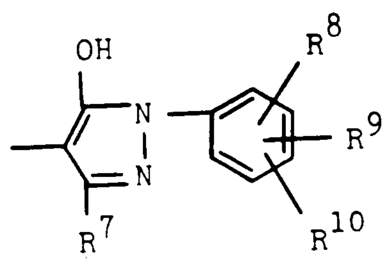

(2c)

in which

| | |
|---|---|
| $R^7$ | is alkyl of 1 to 4 carbon atoms, such as methyl, alkoxy of 1 to 4 carbon atoms, carboxy or carbalkoxy of 2 to 5 carbon atoms, |
| $R^8$ | is hydrogen, sulfo, alkyl of 1 to 4 carbon atoms, alkoxy of 1 to 4 carbon atoms, chloro, bromo, hydroxy or $-SO_2-Y$, |
| $R^9$ | is hydrogen, sulfo, alkyl of 1 to 4 carbon atoms, alkoxy of 1 to 4 carbon atoms or chloro, and |
| $R^{10}$ | is hydrogen or sulfo; |

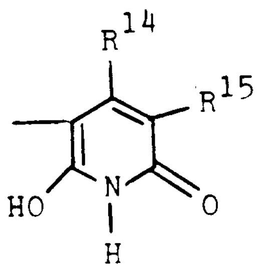

(2e)

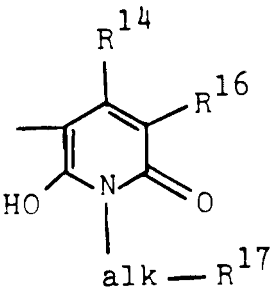

(2f)

in which

- $R^{14}$ is hydrogen, alkyl of 1 to 4 carbon atoms, such as methyl, or phenyl,
- $R^{15}$ is hydrogen, chloro, bromo, sulfo, cyano, carbamoyl, sulfamoyl or carboxy, preferably hydrogen or carbamoyl,
- $R^{16}$ is hydrogen, chloro, bromo, sulfo, cyano, carbamoyl, sulfamoyl or carboxy, preferably hydrogen or carbamoyl, and
- $R^{17}$ is hydroxy, sulfo, sulfato, amino, alkylamino of 1 to 4 carbon atoms, dialkylamino with alkyl group of 1 to 4 carbon atoms each, chloro or alkoxy of 1 to 4 carbon atoms, such as methoxy or ethoxy, preferably methoxy or sulfo;

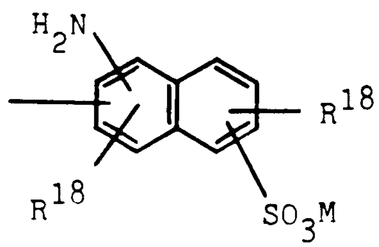

(2g)

in which the free bond is in the ortho- or para-position relatively to the amino group,

- $R^{18}$ is independently selected from hydrogen and sulfo, and
- M is defined as above.

Novel metal complex monoazo dyestuffs which correspond structurally to the dyestuffs of formula (1a), are in particular the 1:1-copper-, 1:2-chromium- and 1:2-cobalt-complex compounds of the monoazo compounds of the general formula (1A)

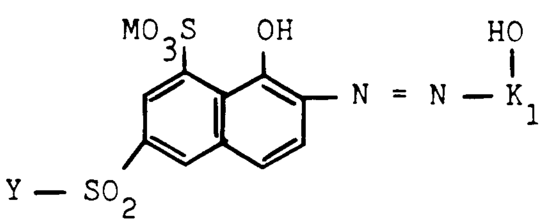

(1A)

in which M and Y are defined as above for formula (1a) and $K_1$ is an unsubstituted or substituted moiety of the coupling components selected from the hydroxy-coupling components mentioned above for the radical K of formulae (2).

Preferred dyestuffs thereof are those conforming to the general formula (1B)

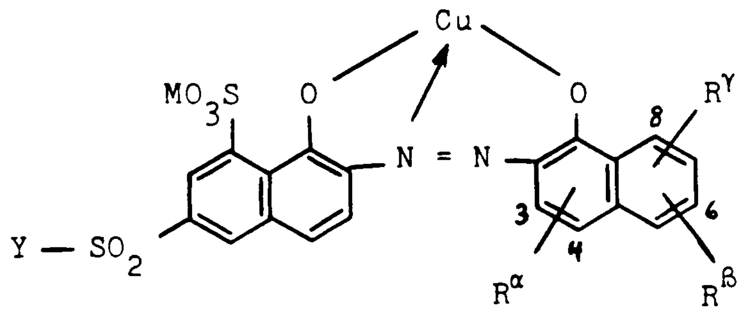

(1B)

in which
$R^\alpha$ is sulfo in the 4-position, and $R^\beta$ and $R^\gamma$ are both hydrogen, or
$R^\alpha$ is sulfo in the 3-position, $R^\beta$ is sulfo in the 6-position and $R^\gamma$ is hydrogen, or
$R^\alpha$ is sulfo in the 3-position, $R^\beta$ is sulfo in the 6-position and $R^\gamma$ is acetylamino in the 8-position.

If the disazo dyes of formula (1b) represent metal-complexes such as 1:1-copper-, 1:2-cobalt- or 1:2-chromium-complex dyes, the radical E, if it is 1,4-phenylene or 1,4-naphthylene, is additionally substituted by a hydroxy group in the ortho-position relative to one of the azo groups and its naphthalene diazo component is optionally also substituted by a hydroxy group in the ortho-position relatively to the azo group as shown above for formula (1A), and the metal is bonded to those hydroxy groups of the diazo component or of E, and of the radical K.

The instant invention concerns also a process for the preparation of the novel mono- and disazo dyes and their metal complex derivatives.

The novel monoazo compounds of the general formula (1a) and the novel disazo compounds of the general formula (1b) are prepared by coupling the diazonium compound of the 2-aminonaphthalene compound of the general formula (3) or of the amino-azo compound of the general formula (4), respectively,

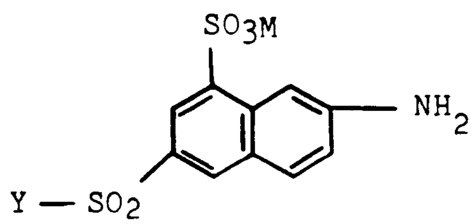

(3)

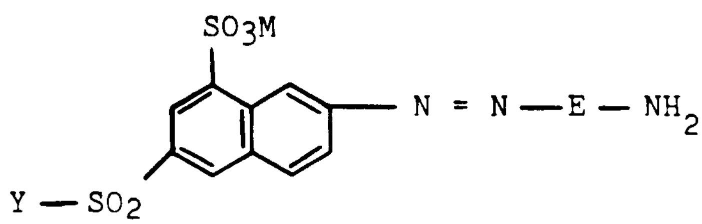

(4)

with a coupling compound of the general formula H-K in which K is defined as above.

Diazotization is carried out by known methods, for ex. by the treatment of the amino compounds of formula (3) or (4) with sodium nitrite in the presence of a mineral acid or by treatment with nitrosyl sulfuric acid, each at a temperature of from -10 °C to +50 °C. Coupling reaction is carried out also in the usual manner old in the art, for ex. at a temperature of from 5 to 30 °C and, dependent from the coupling component - i.e. whether it is an amino or hydroxy coupler - in the range of from 2 to 8, such as from 2 to 5 or 4 to 8 (preferably 4 to 7), respectively.

The copper, chromium and cobalt metal-complex dyes of the dyes of general formula (1a), respectively (1A), and (1b) can be prepared by known methods from the o,o'-dihydroxy-azo dye or the reactive equivalent thereof, e.g., o-alkoxy-o'-hydroxy-azo dyes, or by treating an o'-hydroxy-azo dye of the monoazo

or disazo compounds of formula (1a) and (1b) with a metal such as copper, or a metal-yielding agent, such as copper-yielding agent, and an oxidizing agent, such as hydrogen peroxide, in a weakly acid solution. U.S. Patent Specification 4,400,317 for instance describes a method of preparing the metal complex by treatment with non-salt forming metals.

Preferred coupling components in the azo dyestuffs of the invention are 1-acetoacetylamino-3-methyl-6-methoxy-benzene-4-sulfonic acid, 1-acetoacetylamino-3,6-dimethoxy-benzene-4-sulfonic acid, 1-hydroxynaphthalene-3,6-disulfonic acid, 1-hydroxynaphthalene-4-sulfonic acid, 1-acetylamino-8-hydroxy-naphthalene-3,6-disulfonic acid, 1-acetylamino-8-hydroxy-naphthalene-4,6-disulfonic acid, 1-benzoylamino-8-hydroxy-naphthalene-3,6-disulfonic acid, 1-benzoylamino-8-hydroxy-naphthalene-4,6-disulfonic acid, 2-acetylamino-5-hydroxy-naphthalene-7-sulfonic acid, 3-acetylamino-5-hydroxy-naphthalene-7-sulfonic acid, 1-(4'-sulfophenyl)-3-methyl-5-pyrazolone, 1-(4'-sulfophenyl)-3-carboxy-5-pyrazolone, 1-[4'-(2''-sulfatoethylsulfonyl)-phenyl]-3-methyl-5-pyrazolone, N-(2'-sulfatoethyl)-4-methyl-6-hydroxy-pyridone, and 1-hydroxy-3,6-disulfo-8-[5'-chloro-3'-(2''- or 3''- or 4''-sulfophenyl)-amino-2',4',6'-triazin-1'-yl]-amino-naphthalene.

Most preferred coupling components are 1-acetoacetylamino-3-methyl-6-methoxy-benzene-4-sulfonic acid, 1-hydroxy-naphthalene-3,6-disulfonic acid, 1-hydroxy-naphthalene-4-sulfonic acid, 1-acetylamino-8-hydroxy-naphthalene-3,6-disulfonic acid, 1-acetylamino-8-hydroxy-naphthalene-4,6-disulfonic acid, 1-benzoylamino-8-hydroxy-naphthalene-3,6-disulfonic acid, 1-benzoylamino-8-hydroxy-naphthalene-4,6-disulfonic acid, 2-acetylamino-5-hydroxy-naphthalene-7-sulfonic acid, 1-hydroxy-8-[5'-chloro-3'-(2''- or 3''- or 4''-sulfo-phenyl)-amino-2',4',6'-triazin-1'-yl]-amino-naphthalene-3,6-disulfonic acid and 1-(4-β-sulfatoethylsulfonyl)-phenyl-3-methyl-5-pyrazolone.

The starting amino azo compound of the general formula (4) can be prepared in the usual manner for the synthesis of azo compounds by coupling reaction of the diazotized 2-amino-naphthalene compound of the formula (3) with a compound of the general formula $H-E-NH_2$ in which E is defined as above.

Starting compounds of the general formula $H-E-NH_2$ which are capable of coupling with a diazo component to form an azo compound which again can be used as a diazo component, are for example 1-amino-naphthalene-6-sulfonic acid, 1-amino-naphthalene-7-sulfonic acid, 1-hydroxy-6- or -7-amino-naphthalene-3-sulfonic acid, 3-methyl-aniline or 3-ureido-aniline, preferably 1-amino-naphthalene-6-sulfonic acid and 3-ureido-aniline.

The starting 2-amino-naphthalene compound of the general formula (3) can be prepared as a single and highly pure compound without disturbing formation of by-products, such in particular isomeric sulfo-substituted compounds, by reacting its acylamino derivative of the general formula (5)

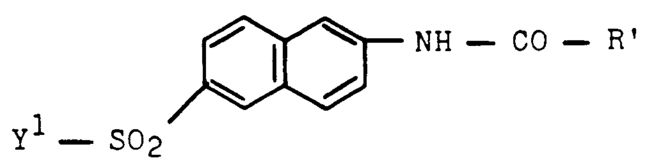

(5)

in which $Y^1$ has one of the meanings give for Y or is a β-hydroxyethyl group and R' is an alkyl of 1 to 5 carbon atoms or a phenyl which is unsubstituted or substituted by methyl, ethyl, sulfo, carboxy and/or chlorine, with a sulfonating agent.

Preferably, the group $Y^1-SO_2-$ is β-chloro- or β-bromoethylsulfonyl, β-hydroxyethylsulfonyl, β-sulfatoethylsulfonyl, β-phosphatoethylsulfonyl, β-thiosulfatoethylsulfonyl, most preferably β-hydroxyethylsulfonyl or β-sulfatoethylsulfonyl.

Common sulfonation agents can be used, such as fuming sulfuric acid, sulfur trioxide, chlorosulfonic acid. Preferably the sulfonation is conducted in a sulfuric acid reaction medium with oleum (fuming sulfuric acid). The reaction product of the sulfonation can then be deacylated by diluting with water and heating in the aqueous, about 80 to 100 % b.w. sulfuric acid at a temperature of about 100 to 115 °C.

The compounds of formula (5) are prepared by acylation of amino-naphthalenes of the general formula (6)

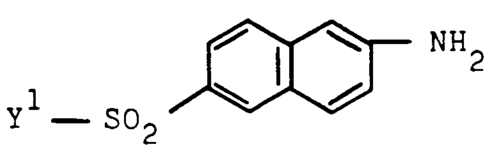

(6)

in which $Y^1$ is defined as above. The acylating agent which may be employed may be any of those currently utilized to acylate aromatic amines. Typical acylating agents are the anhydrides and acid halides such as compounds of the formulae (7a) and (7b)

R' - CO-O-CO - R'    (7a)

Z - OC - R'    (7b)

wherein Z is halogen, preferably chlorine or bromine, and R' is defined as above. Most preferably acetic anhydride, phthalic anhydride and benzoyl chloride are used.

The acylation reaction may be conducted in aqueous solution or in the solid phase for example, according to European Patent Publication No. 0,168,680A and US-Patent Specification 4,379,937, the teachings of which are incorporated herein by reference.

The acylated, sulfonyl-substituted, aminonaphthalene is then sulfonated, preferably in sulfuric acid with oleum at a temperature between 0 and 80 ° C, preferably between 10 and 50 ° C, most preferably between 5 and 15 ° C. Surprisingly, the process of sulfonation occurs regiospecifically.

It will be readily apparent to one skilled in the art that the β-sulfatoethylsulfonyl group usually present in the starting compound of formula (3), may be replaced with another fiber reactive moiety represented by the formula radical Y. Replacement of the sulfato leaving group can be done either prior to or subsequent to sulfonation depending upon the reactivity of leaving group to the sulfonation step. Examples of other leaving substituents are halogen atoms, such as chlorine or bromine, an acyloxy group such as the acetyloxy group, a dialkylamino group such as the dimethylamino or diethylamino group, the thiosulfato or the phosphato group; preferably the leaving group is the sulfato group. Similarily, the fiber-reactive group may be converted into its vinyl form ($-CH=CH_2$) after the dyestuff has been prepared.

The sulfonation of these N-acylated 2-aminonaphthalenes according to the invention results in a single specific sulfonation product. This has great technical advantages. For example, the 2-amino-8-(β-sulfatoethylsulfonyl)-naphthalene-6-sulfonic acid is an important intermediate used in the preparation of monoazo and disazo dyestuffs (see, for example, U.S. Patent 4,046,475).
The ability to produce it as a pure single reaction product presents cost-saving opportunity and a better starting material since residual contamination with the 3-sulfo isomer can cause a hypsochromic shift in the resulting dyestuff.

Preferably, the sulfonation is conducted by dissolving the N-acylated-2-aminonaphthalene of formula (6) in sulfuric acid at a temperature between 0 and 50 ° C, preferably preferably between 10 and 15 ° C, to reduce the possibility of deacylating the reactant. The acylated compound is then sulfonated between 10 and 50 ° C, preferably between 10 and 15 ° C, by treatment with oleum.

After completing the sulfonation, the sulfonation product may be deacylated or recovered in the N-acyl form. Deacylation can be conducted by any known method, preferably by the addition of water to the reaction product and heating, for example, by dilution with water until the sulfuric acid concentration is between 85 and 100 percent, preferably 95 and 98 %, and heating to 80 to 120 ° C, preferably 100 to 110 ° C.

The azo compounds of formulae (1a) and (1b) and their metal complex compounds can be separated from the reaction medium after their preparation, by known methods suitable for water-soluble compounds, such as, by precipitation from the reaction medium with electrolytes, such as sodium chloride or potassium chloride, or by evaporation of the reaction medium, for example by spray-drying. When the latter method for isolation is chosen, it can be advantageous to remove sulfates if they are present in the synthesis solutions, before evaporation. This can be done by precipitation of the sulfates as calcium sulfate and filtration. In some cases, it is also possible for the solutions obtained in the synthesis to be used directly, after standardization with water, as a liquid dyestuff composition. These liquid dyestuff compositions, especially useful in chemical-pad-steam applications, show no chemical or physical changes on long term storage.

The compounds according to the invention are suitable, as water-soluble dyestuffs, for coloring (dyeing and printing) of fibers, leather or other materials containing hydroxy groups and/or amino groups. They may be used in their free acid form, preferably in form of their salts. Exemplary materials are natural, regenerated or synthetic, nitrogen-containing fibers and natural, regenerated or synthetic hydroxy group containing fibers. The dyestuffs according to the invention are capable of coloring these materials to deep, brilliant shades ranging from yellow to blue with superior properties. The fiber-reactive groups in the compounds of the invention can react with the $NH_2$- and OH-groups of the material, such as a cotton containing hydroxy groups, to form a covalent bond and thus form a bonded link with the fiber.

The present invention also relates to the use of the dyestuffs of the invention for coloring (such as dyeing and printing) such materials and to a process for coloring such materials. This process comprises contacting a dyestuff of the instant invention, preferably in the form of an aqueous solution, with the material and fixing said dyestuff on the material optionally under the action of an alkaline agent and/or heat.

Typical nitrogen-containing synthetic materials useful in this invention are polyurethanes and polyamides, such as nylon-6, nylon-6/6 and nylon-11. Typical natural polymaide materials are silk and wool and other animal hair products. Typical materials containing hydroxy groups are polyvinyl alcohols, cellulosic materials such as cotton, other vegetable fibers, such as linen, hemp, jute and their regenerated products, such as viscose rayon or cuprammonium rayon.

The novel dyestuffs of the invention can be applied by the known application techniques for fiber-reactive dyestuffs. In general, a procedure is followed in which an aqueous solution of the compounds or their metal complex are applied to the materials, optionally in the presence of a thickener and/or other auxiliaries to improve the affinity, levelling and migration properties. After application the dyestuff is then fixed to the fiber.

The dyestuffs of the invention are applied to natural or regenerated or synthetic polyamide fibers or polyurethane fibers or to leather by conventional techniques from an aqueous acid to aqueous neutral solution (pH range from about 3 to 6.5), usually by the exhaustion method, and are fixed on these fibers by the application of heat at a temperature between 60 and 130°C. It is possible for example to add acetic acid or acetic acid and ammonium acetate as a buffer to the bath containing the dyestuffs in order to obtain the desired pH value. Addition of leveling agents, for example those based on a reaction product of cyanuric chloride with three moles of an aminobenzenesulfonic acid and/or an amino-naphthalenesulfonic acid or those based on a reaction product of stearylamine and ethylene oxide, can be used for the purpose of achieving level dyeings. The compounds of the invention can be applied and fixed on the material by the exhaustion process either at the boiling point or at a higher temperature, for example, at 105 to 120°C, under pressure. It is expedient for the dyeing to be started with a slow increase in temperature to 60°C and, after some time, for the temperature to be increased slowly to a higher temperature.

In the coloring of fiber materials containing hydroxy groups, the dyestuffs of the invention are generally applied to the fiber from a weakly acid to alkaline solution and fixed on the fiber by an alkaline agent subsequently added to the dye bath or applied directly to the fiber. Typical alkaline substances which can be used in these fixing solutions are sodium hydroxide, sodium carbonate, sodium bicarbonate, potassium hydroxide, potassium carbonate, trisodium phosphate or sodium or potassium silicate or waterglass. The dyestuffs can be applied by exhaustion dyeing procedures or the chemical pad steam process. In the exhaust method, the fiber material is treated in an aqueous-alkaline solution of the compound of the invention, preferably in the presence of an electrolyte, such as sodium chloride or sodium sulfate, at an elevated temperature between 30 and 130°C. It is preferably for the dyeing to be started at a low temperature and for the temperature of the exhaustion bath to be slowly increased to about 60 to 130°C, and completing the fixation step in this temperature range.

In the chemical-pad-steam method, the fabric is continuously passed through a dyebath, dried, passed through an alkaline chemical pad, fixed by steaming, washed an dried. Fiber reactive dyes perform well in this application.

If the dyestuffs of the invention are applied to the fiber material in the form of printing pastes, it is usual to employ thickeners, such as sodium alginate, cellulose ether, tragacanth or gum arabic, optionally with the addition of a printing auxiliary and an alkaline compound. These prints are then treated with hot air at a temperature between 70 and 230°C, preferably between 100 and 150°C (thermofixes), or steamed. The dyestuffs of invention can be applied to the fiber by customary printing processes such as a one-step procedure using a printing paste of the dyestuff contaning sodium bicarbonate or one of the other alkaline agents with subsequent fixation of the dyestuffs by steaming at 101 to 103°C. They also can be applied to the fiber by a two-step process of applying a neutral or weakly acid printing paste of the dyestuff and then fixing it either by passing the printed material through a hot alkaline bath containing electrolytes. Alternatively, it can be overpadded with an alkaline liquor containing electrolytes and left to stand at room temperature but usually it is treated with heat using hot steam or hot air. If an electrolyte-contianing alkaline bath is used for fixing, the bath temperature is 60 to 105°C, so that subsequent treatment by hot air or steam can be eleminated.

If the material is impregnated with the dyestuffs of the invention and treated with a trong aqueous alkali (e.g. sodium hydroxide or potassium hydroxide and/or sodium silicate or potassium silicate or trisodium phosphate), it is sufficient for the moist goods (usually prints) to be left to stand at room temperature for a relatively long period to fix the dyestuff. The colored materials thus obtained are then after-treated, rinsed and dried, in the usual manner.

The following Examples illustrate the invention. Parts and percentages are by weight unless stated otherwise. Parts by weight relate to parts by volume as the kilogram relates to the liter.

The azo compounds described are in general specified in the form of the free acids; in general, they are prepared and isolated in the form of their sodium or potassium salts and used for dyeing in the form of their salts. The starting compounds mentioned in the form of the free acid are employed in the synthesis, as such or in the form of their salts preferably alkali metal salts, such as sodium or potassium salts.

The $\lambda_{max}$-values given in the Examples for the azo compounds according to the invention represent the absorption maxima in the visible region, measured on the alkali metal salts of the dyestuffs according to the invention in aqueous solution.

**Example A**

This example illustrates the preparation 2-amino-6-(β-sulfatoethylsulfonyl)-naphthalene-8-sulfonic acid. Into a 500 ml round bottom flask equipped with a mechanical stirrer, thermometer and drying tube were charged 162 grams of sulfuric acid monohydrate at a temperature of approximately 15 ° C. Then 73.3 grams of 2-acetylamino-naphthalene-6-β-hydroxyethylsulfone were slowly added over a four hour period. The reaction mixture was then stirred at about 15 ° C for one additional hour and then 100 grams of 65 % oleum were added. After completing the oleum addition, the reaction mixture was allowed to warm to room temperature at which point the sulfonation reaction was complete.

Approximately 14 grams of ice were added to the reaction mixture and it was then heated under agitation to 100-110 ° C for two hours to effect deacetylation. The reaction mixture was then cooled to 25 ° C and drowned onto 250 grams of water, sodium chloride and ice. The reaction mixture was stirred for one half hour, filtered and washed with a cold 20 % sodium chloride solution. 147.3 grams of wet press cake were obtained containing 71.6 grams of 2-amino-6-(β-hydroxyethylsulfonyl)-naphthalene-8-sulfonic acid. No other isomeric sulfonation reaction products were detected in the reaction product or the wet press cake.

**Example 1**

A dyestuff of the following formula in its free acid form was prepared:

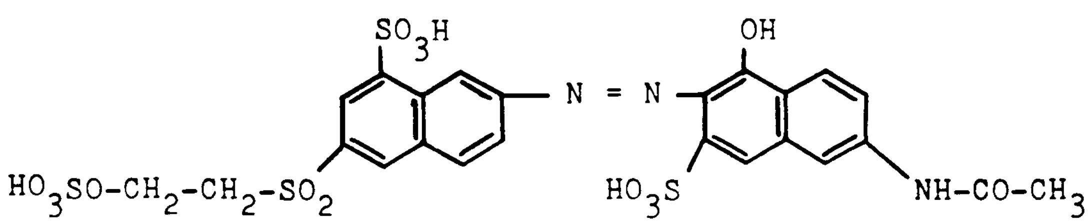

$(\lambda_{max} = 490\ nm)$.

Into a 2 liter beaker equipped with a mechanical stirrer, thermometer and pH probe were added 500 ml of water and 144 grams of a wet presscake containing 82.2 grams of 2-amino-8-sulfonaphthalene-6-(β-sulfatoethyl)-sulfone. The slurry was stirred for two hours and cooled to 0-5 ° C. While maintaining the temperature at 0-5 ° C and pH less than 2, 35 grams of a 40 % solution of sodium nitrite were added over one hour. The reaction was stirred for one hour with a slight excess of nitrite present. The excess nitrite was decomposed by the addition of 1 gram of sulfamic acid.

756 grams of a solution containing 56.2 grams of 7-acetamino-4-hydroxy-2-naphthalene sulfonic acid were added to the reaction mixture and the pH was adjusted to 5.0-5.5 by the addition of 142 grams of 15 % sodium carbonate solution. The resulting solution was dried to yield an orange dyestuff which yields according to known dyeing procedure for fibre-reactive dyes on, for example, cotton dyeings and prints of orange shade having good dyeing properties, especially when used in combination with other dyes, i.e. in a dichromatic or trichromatic dyeing system.

**Example 2**

A dyestuff of the following formula in its free acid form was prepared:

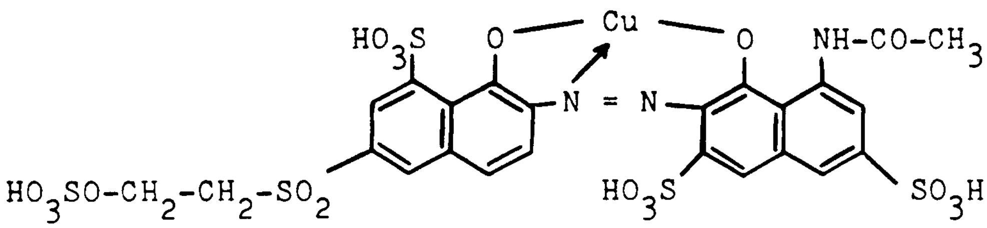

($\lambda_{max}$ = 580 nm).

Into a 4 liter equipped with a mechanical stirrer, thermometer and pH probe were added 500 ml of water and 200 grams of a press cake containing 82.2 grams of 2-amino-8-sulfo-naphthalene-6-(β-sulfatoethyl)-sulfone. The slurry was stirred for two hours and then cooled to 0-5° C. While maintaining the temperature at 0-5° C and pH less than 2, 35 grams of a 40 % solution of sodium nitrite were added over one hour. The reaction was stirred for one hour with a slight excess of nitrite present. The excess nitrite was decomposed by the addition of 1 gram of sulfamic acid.

442 grams of a solution containing 72.2 grams of 4-hydroxy-5-acetamino-naphthalene-2,7-disulfonic acid were added and the pH of the reaction adjusted to 5.0-5.5 by the addition of 105 grams of a 15 % solution of sodium carbonate. Then 250 grams of a 20% solution of copper sulfate pentahydrate were added and over 2 hours, 100 grams of 30 % hydrogen peroxide were added while maintaining the pH at 5.0-5.5 by the addition of 15 grams of sodium carbonate.

250 grams of potassium chloride were added, the reaction stirred overnight and filtered. The resulting presscake was dried to yield a blue dyestuff which yields according to known dyeing procedure for fibre-reactive dyes on, for example, cotton dyeings and prints of blue shade having good dyeing properties, especially when used in combination with other dyes, i.e. in a dichromatic or trichromatic dyeing system.

**Example 3**

A dyestuff of the following formula in its free acid form was prepared:

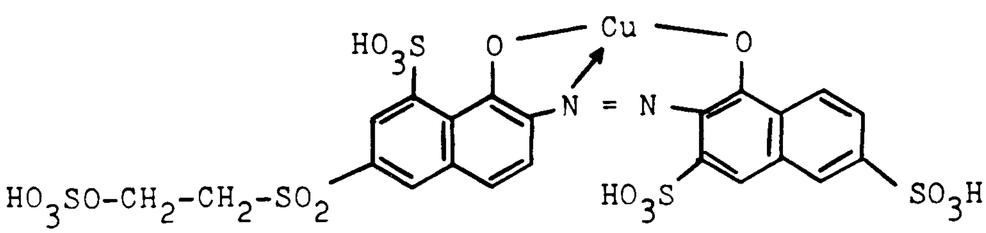

($\lambda_{max}$ = 572 nm).

This dyestuff was prepared substantially in accordance with the procedure of Example 2 except the coupling component used was 1-hydroxynaphthalene-3,6-disulfonic acid. The resulting dyestuff which yields according to known dyeing procedure for fibre-reactive dyes on, for example, cotton dyeings and prints of blue shade having good dyeing properties, especially when used in combination with other dyes, i.e. in a dichromatic or trichromatic dyeing system.

**Example 4**

A dyestuff of the following formula in its free acid form was prepared:

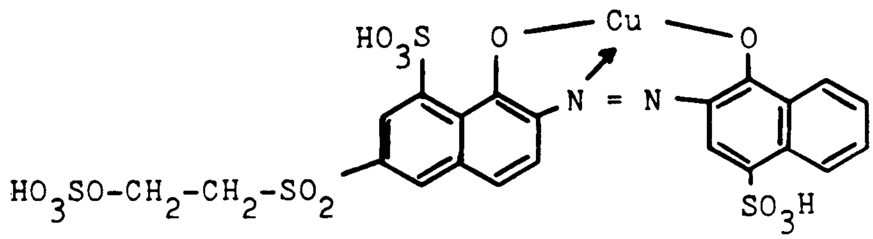

$(\lambda_{max} = 555\ nm)$.

This dyestuff was prepared substantially in accordance with the procedure of Example 2 except the coupling component was 1-hydroxynaphthalene-4-sulfonic acid. The resulting dyestuff yields according to known dyeing procedure for fibre-reactive dyes on, for example, cotton dyeings and prints of blue shade having good dyeing properties, especially when used in combination with other dyes, i.e. in a dichromatic or trichromatic dyeing system.

**Example 5**

A dyestuff of the following formula in its free acid form was prepared:

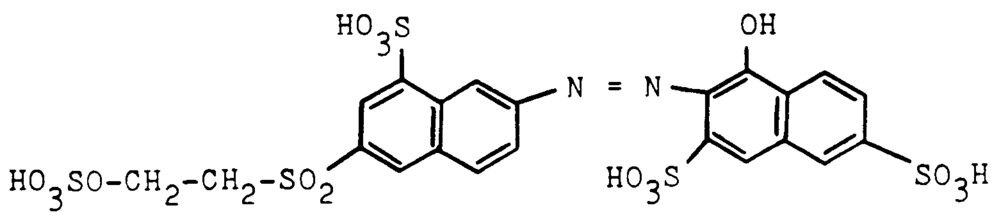

$(\lambda_{max} = 497\ nm)$.

This dyestuff was prepared substantially in accordance with Example 3 except the coppering step was not conducted. The resulting dyestuff yields according to known dyeing procedure for fibre-reactive dyes on, for example, cotton dyeings and prints of scarlet shade having good dyeing properties, especially when used in combination with other dyes, i.e. in a dichromatic or trichromatic system.

**Example 6**

A dyestuff of the following formula in its free acid form was prepared:

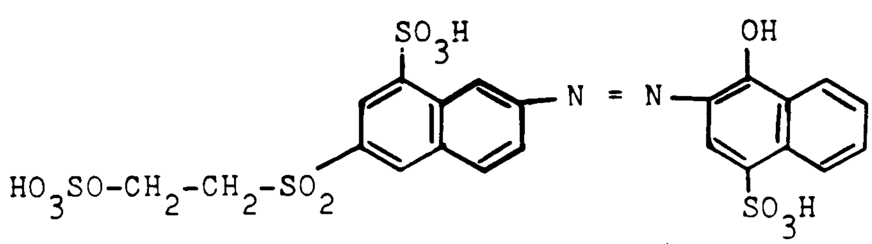

$(\lambda_{max} = 500\ nm)$.

This dyestuff was prepared in accordance with the procedure of Example 4 except the coppering step was not done. The resulting dyestuff yields according to known dyeing procedure for fibre-reactive dyes on, for example, cotton dyeings and prints of scarlet shade having good dyeing properties, especially when used in combination with other dyes, i.e. in a dichromatic or trichromatic system.

**Example 7**

A dye stuff of the following formula in its free acid form was prepared:

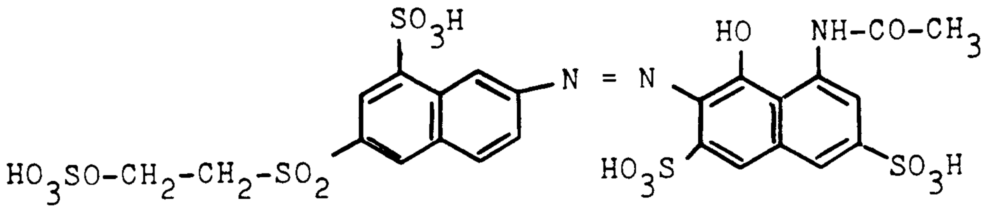

$(\lambda_{max} = 512\ nm)$.

Into a 2 liter beaker equipped with a mechanical stirrer, thermometer and pH probe were added 500 ml of water and 144 grams of a wet presscake containing 82.2 grams of 2-amino-8-sulfonaphthalene-6-(β-sulfatoethyl)-sulfone. The slurry was stirred for two hours and cooled to 0-5°C. While maintaining the temperature at 0-5°C and pH less than 2, 35 grams of a 40 % solution of sodium nitrite were added over one hour. The reaction was stirred for one hour with a slight excess of nitrite present. The excess nitrite was decomposed by the addition of 1 gram of sulfamic acid.

An aqueous solution containing 72.2 grams of 1-acetylamino-8-hydroxy-naphthalene-3,6-disulfonic acid were added to the reaction mixture and the pH was adjusted to 5.0-5.5 by the addition of a 15 % sodium carbonate solution. The resulting solution was dried to yield a red dyestuff which yields according to known dyeing procedure for fibre-reactive dyes on, for example, cotton dyeings and prints of red shade having good dyeing properties, especially when used in combination with other dyes, i.e. in a dichromatic or trichromatic system.

**Example 8**

A dyestuff of the following formula in its free acid form was prepared:

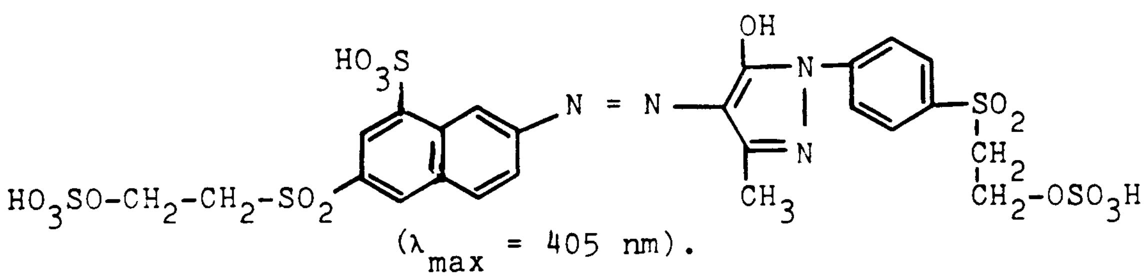

$(\lambda_{max} = 405\ nm)$.

Into a 4 liter equipped with a mechanical stirrer, thermometer and pH probe were added 500 ml of water and 200 grams of a press cake containing 82.2 grams of 2-amino-8-sulfo-naphthalene-6-(β-sulfatoethyl)-sulfone. The slurry was stirred for two hours and then cooled to 0-5°C. While maintaining the temperature at 0-5°C and pH less than 2, 35 grams of a 40 % solution of sodium nitrite were added over one hour. The reaction was stirred for one hour with a slight excess of nitrite present. The excess nitrite was decomposed by the addition of 1 gram of sulfamic acid.

An aqueous solution containing 72.2 grams of 1-(4'-β-sulfatoethylsulfonyl-phenyl)-3-methyl-5-pyrazolone were added, and the pH of the reaction adjusted to 5.0-5.5 by the addition of a 15 % solution of sodium carbonate. The reaction solution was cooled to 10-15°C, filtered to remove the precipitated sodium sulfate

and dried, for example, by spray-drying or evaporation under reduced pressure. A yellow dyestuff powder of the above mentioned azo dyestuff is obtained which has good dyeing properties especially when used in combination with other dyes, i.e. in a dichromatic or trichromatic dyeing system, and yields, according to known dyeing procedures for fibre-reactive dyes on, for example, cotton, dyeings and prints of yellow shade.

Examples 9 to 19

Other useful dyestuffs with similar dyeing properties can be obtained according to a process of the invention, such as for example analogously to one of the above Examples, employing a 2-amino-6-VS-naphthalene-8-sulfonic acid compound as the diazo component and a coupling component as set forth in the following Table.

| Example | Naphthylamine Base | Coupler | Shade |
|---|---|---|---|
| 9 | 2-amino-6-(ß-sulfatoethyl-sulfonyl)-naphthalene-8-sulfonic acid | 1-acetylamino-8-hydroxy-naphthalene-4,6-disulfonic acid | red |
| 10 | dito | 1-benzoylamino-8-hydroxy-naphthalene-3,6-disulfonic acid | red |
| 11 | dito | 1-benzoylamino-8-hydroxy-naphthalene-4,6-disulfonic acid | red |
| 12 | dito | 3-acetylamino-5-hydroxy-naphthalene-7-sulfonic acid | scarlet |
| 13 | dito | 1-(4'-sulfophenyl)-3-methyl-5-pyrazolone | yellow |
| 14 | dito | 1-(4'-sulfophenyl)-3-carboxy-5-parazolone | yellow |

| Example | Naphthylamine Base | Coupler | Shade |
|---|---|---|---|
| 15 | 2-amino-6-(ß-sulfatoethyl-sulfonyl)-naphthalene-8-sulfonic acid | 1-(4'-[2"-(sulfatoethylsulfonyl)-phenyl]-3-methyl-5-pyrazolone | yellow |
| 16 | dito | N-(2-sulfoethyl)-4-methyl-6-hydroxy-pyridone | yellow |
| 17 | dito | 1-hydroxy-8-[3'-(3"-sulfo-phenyl)-amino-(5'-chloro-2',4',6'-triazin-1'-yl]-amino-3,6-disulfo-naphthalene | red |

## Claims

**1.** A monoazo and disazo dyestuff which corresponds to the general formula (1a) or (1b)

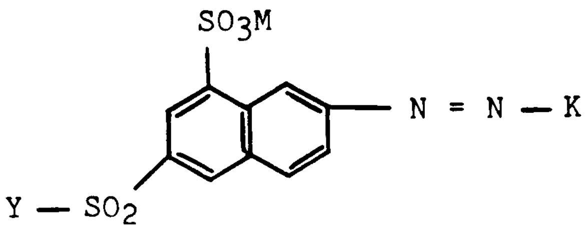

(1a)

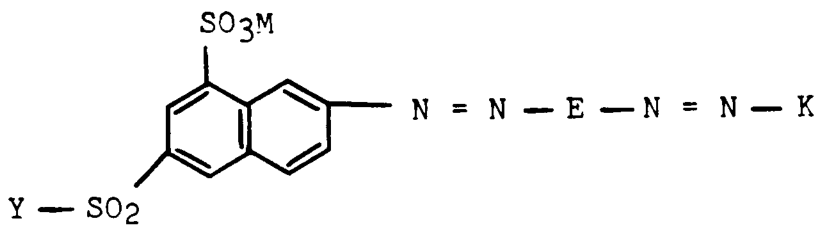

(1b)

wherein:

- M is hydrogen or an alkali metal;
- Y is vinyl or is an ethyl substituted in the $\beta$-position by an organic or inorganic substituent which is capable of being split off by means of an alkali;
- E is 1,4-phenylene or 1,4-naphthylene optionally substituted with one or two substituents independently selected from chloro, fluoro, bromo, sulfo, carboxy, alkoxy of 1 to 4 carbon atoms, alkyl of 1 to 4 carbon atoms, benzoylamino, sulfobenzoylamino, alkanoylamino of 2 to 5 carbon atoms and ureido, or E is 2,6- or 2,7-naphthylene substituted in the 1-position by hydroxy and substituted by 1 or 2 sulfo groups;
- K is a group according to one of the general formulae (2a), (2b), (2c), (2e), (2f) and (2g)

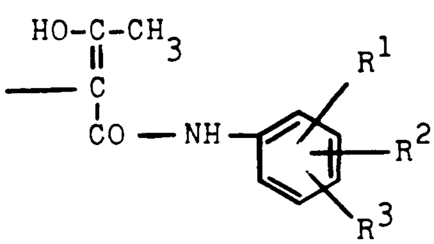

(2a)

wherein

- $R^1$ is hydroxy, chloro, bromo, alkyl of 1 to 4 carbon atoms, alkoxy of 1 to 4 carbon atoms, sulfo or a group $-SO_2-Y$ wherein Y has one of the above meanings,
- $R^2$ is chloro, alkyl of 1 to 4 carbon atoms, alkoxy of 1 to 4 carbon atoms or sulfo, and
- $R^3$ is chloro, alkyl of 1 to 4 carbon atoms, alkoxy of 1 to 4 carbon atoms or sulfo,
- $R^1$, $R^2$ and $R^3$ having meanings which may be identical to or different from one another;

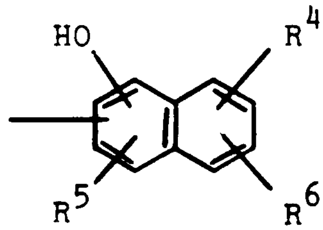

(2b)

wherein

the free bond is in the ortho-position relative to the hydroxy group,

- $R^4$ is hydrogen, alkyl of 1 to 4 carbon atoms, alkoxy of 1 to 4 carbon atoms, sulfo, amino, hydroxy, benzoylamino, sulfobenzoylamino, alkanoylamino of 2 to 5 carbon atoms, N-alkylamino of 1 to 4 carbon atoms or 3-phenylamino-5-chloro-s-triazin-1-yl-amino, the benzene moiety in the latter group being optionally substituted by sulfo, carboxy, chloro, methyl, ethyl, methoxy, ethoxy and/or nitro, preferably at least by a sulfo group,
- $R^5$ is hydrogen or sulfo and
- $R^6$ is hydrogen or sulfo,
- $R^4$, $R^5$ and $R^6$ having meanings which are identical to or different from another;

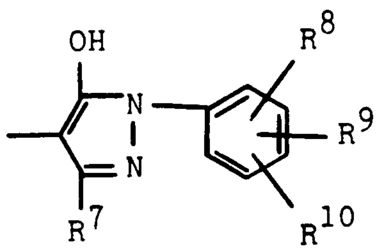

(2c)

in which

- $R^7$ is alkyl of 1 to 4 carbon atoms, alkoxy of 1 to 4 carbon atoms, carboxy or carbalkoxy of 2 to 5 carbon atoms,
- $R^8$ is hydrogen, sulfo, alkyl of 1 to 4 carbon atoms, alkoxy of 1 to 4 carbon atoms, chloro, bromo, hydroxy or $-SO_2-Y$ ,
- $R^9$ is hydrogen, sulfo, alkyl of 1 to 4 carbon atoms, alkoxy of 1 to 4 carbon atoms or chloro, and
- $R^{10}$ is hydrogen or sulfo;

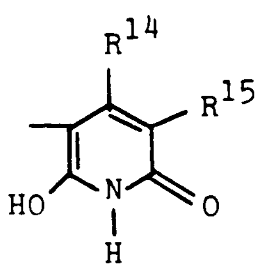

(2e)

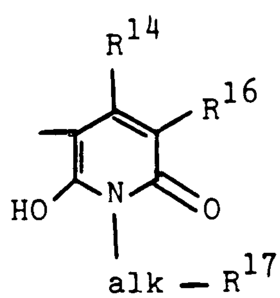

(2f)

in which

- $R^{14}$ is hydrogen, alkyl of 1 to 4 carbon atoms, preferably thereof methyl, or is phenyl,
- $R^{15}$ is hydrogen, chloro, bromo, sulfo, cyano, carbamoyl, sulfamoyl or carboxy, preferably hydrogen or carbamoyl,
- $R^{16}$ is hydrogen, chloro, bromo, sulfo, cyano, carbamoyl, sulfomoyl or carboxy, preferably hydrogen or carbamoyl, and

$R^{17}$ is hydroxy, sulfo, sulfato, amino, alkylamino of 1 to 4 carbon atoms, dialkylamino with alkyl group of 1 to 4 carbon atoms each, chloro or alkoxy of 1 to 4 carbon atoms, preferably methoxy or sulfo;

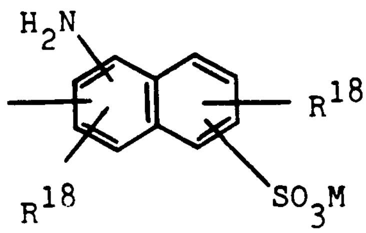

(2g)

in which
the free bond is in the ortho- or para-position relatively to the amino group,

$R^{18}$ is each independently selected from hydrogen and sulfo, and

M is defined as above;

or the 1:1-copper complex, 1:2-cobalt complex or 1:2-chromium complex compound thereof.

**2.** An azo compound according to claim 1, wherein Y is $\beta$-chloroethyl, $\beta$-sulfatoethyl, $\beta$-phosphatoethyl or $\beta$-thiosulfatoethyl.

**3.** An azo compound according to claim 1, wherein Y is $\beta$-sulfatoethyl.

**4.** A monoazo dyestuff according to at least of one of claims 1 to 3, of the general formula

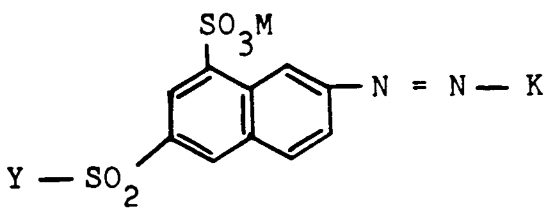

in which K is 3-acetylamino-6-sulfo-8-hydroxy-naphth-7-yl or 3,6-disulfo-8-hydroxy-naphth-7-yl or 4-sulfo-1-hydroxy-naphth-2-yl.

**5.** A copper complex monoazo dyestuff according to at least one of claims 1 to 3, of the general formula (1B)

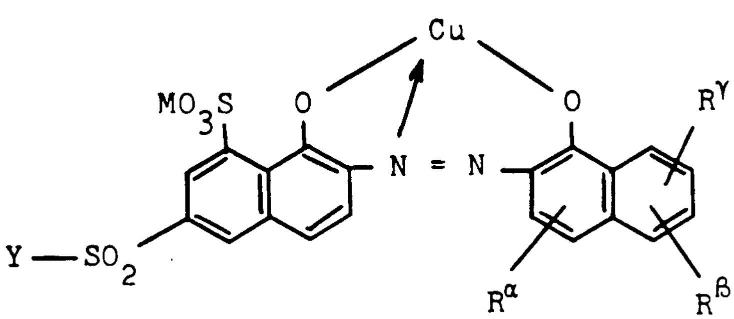

(1B)

in which
$R^{\alpha}$ is sulfo in the 4-position, and $R^{\beta}$ and $R^{\gamma}$ are both hydrogen, or
$R^{\alpha}$ is sulfo in the 3-position, $R^{\beta}$ is sulfo in the 6-position and $R^{\gamma}$ is hydrogen, or

$R^{\alpha}$ is sulfo in the 3-position, $R^{\beta}$ is sulfo in the 6-position and $R^{\gamma}$ is acetylamino in the 8-position.

6. A process for the preparation of a monoazo or disazo compound of formula (1a) or (1b) mentioned and defined in claim 1, characterized in that a compound of the general formula (3) or (4)

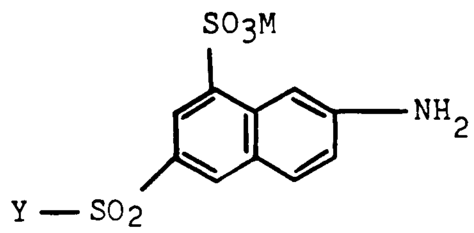

(3)

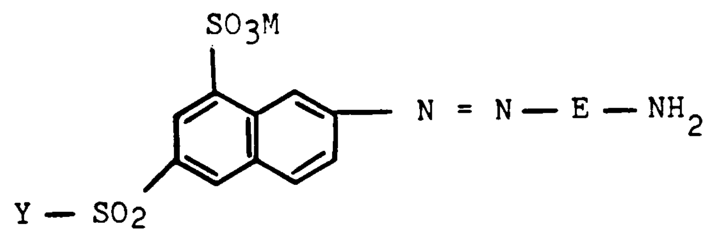

(4)

is diazotized and coupled with a compound of the general formula H-K in which K is defined as in claim 1.

7. A process for the preparation of a metal complex, preferably 1:1-copper complex, of a monoazo or disazo compound of claim 1, characterized in that a metal-free monoazo or disazo dyestuff of claim 1 is reacted with a metal donor agent, preferably with a copper yielding agent in the presence of an oxidizing agent.

8. Use of an azo compound of claim 1 as a dye for dyeing or printing a hydroxy and/or carboxamido-containing fiber material.

9. A process for dyeing or printing a hydroxy and/or carboxamido-containing fiber material by applying a dye to the material and fixing it by means of heat and/or by means of an acid-binding agent, characterized in that the dye used is a compound of claim 1.

**Patentansprüche**

**1.** Ein Monoazo- und Diazofarbstoff, der der folgenden allgemeinen Formel (1a) oder (1b) entspricht

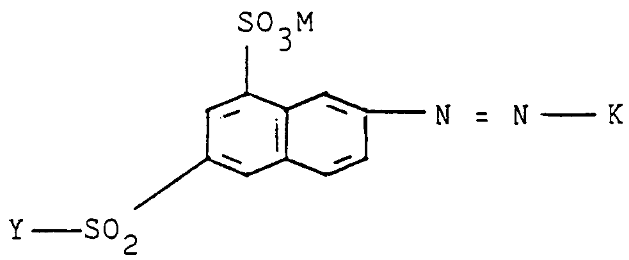

(1a)

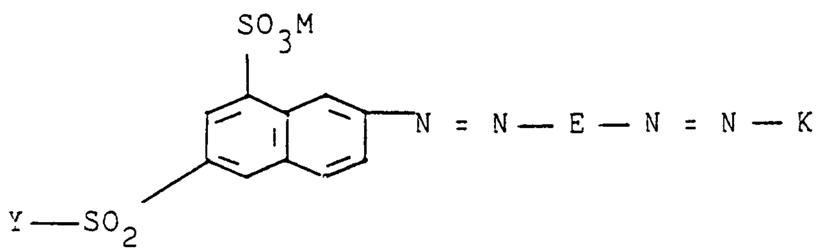

(1b)

worin M Wasserstoff oder ein Alkalimetall, Y Vinyl oder Äthyl, welches in $\beta$-Stellung durch einen organischen oder anorganischen Substituenten substituiert ist, der mittels Alkali abgespalten werden kann,und E 1,4-Phenylen oder 1,4-Naphthylen bedeutet, welches gegebenenfalls durch einen oder zwei Substituenten substituiert ist, unabhängig voneinander ausgewählt aus Chlor, Fluor, Brom, Sulfo, Carboxy, Alkoxy mit 1 bis 4 C-Atomen, Alkyl mit 1 bis 4 C-Atomen, Benzoylamino, Sulfobenzoylamino, Alkanoylamino mit 2 bis 5 C-Atomen und Ureido, oder E 2,5- oder 2,7-Naphthylen bedeutet, das in 1-Stellung durch Hydroxy und durch 1 oder 2 Sulfogruppen substituiert ist, K einen Rest entsprechend einer der allgemeinen Formeln (2a), (2b), (2c), (2e), (2f) und (2g) bedeutet:

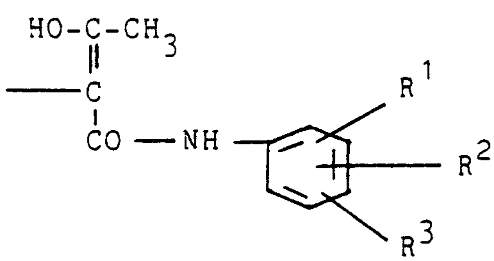

(2a)

worin $R^1$ Hydroxy, Chlor, Brom, Alkyl mit 1 bis 4 C-Atomen, Alkoxy mit 1 bis 4 C-Atomen, Sulfo oder einen Rest $-SO_2-Y$, in welchem Y eine der oben angegebenen Bedeutungen hat, $R^2$ Chlor, Alkyl mit 1 bis 4 C-Atomen, Alkoxy mit 1 bis 4 C-Atomen oder Sulfo und $R^3$ Chlor, Alkyl mit 1 bis 4 C-Atomen, Alkoxy mit 1 bis 4 C-Atomen oder Sulfo bedeutet, wobei $R^1$, $R^2$ und $R^3$ Bedeutungen haben, die zueinander identisch oder voneinander verschieden sein können;

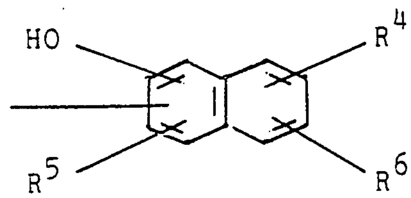

(2b)

worin sich die freie Bindung in o-Stellung in bezug auf die Hydroxygruppe befindet, $R^4$ Wasserstoff, Alkyl mit 1 bis 4 C-Atomen, Alkoxy mit 1 bis 4 C-Atomen, Sulfo, Amino, Hydroxy, Benzoylamino, Sulfobenzoylamino, Alkanoylamino mit 2 bis 5 C-Atomen, N-Alkylamino mit 1 bis 4 C-Atomen oder 3-Phenylamino-5-chlor-s-triazin-1-yl-amino bedeutet, wobei der Benzolrest der letzteren Gruppe gegebenenfalls durch Sulfo, Carboxy, Chlor, Methyl, Äthyl, Methoxy, Äthoxy und/oder Nitro, vorzugsweise durch mindestens eine Sulfogruppe, substituiert ist, $R^5$ Wasserstoff oder Sulfo und $R^6$ Wasserstoff oder Sulfo bedeutet, wobei $R^4$, $R^5$ und $R^6$ Bedeutungen haben die zueinander identisch oder voneinander verschieden sind;

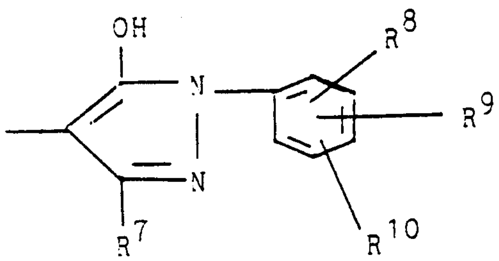

(2c)

worin $R^7$ Alkyl mit 1 bis 4 C-Atomen, Alkoxy mit 1 bis 4 C-Atomen, Carboxy oder Carbalkoxy mit 2 bis 5 C-Atomen, $R^8$ Wasserstoff, Sulfo, Alkyl mit 1 bis 4 C-Atomen, Alkoxy mit 1 bis 4 C-Atomen, Chlor, Brom Hydroxy oder $-SO_2Y$, $R^9$ Wasserstoff, Sulfo, Alkyl mit 1 bis 4 C-Atomen, Alkoxy mit 1 bis 4 C-Atomen oder Chlor und $R^{10}$ Wasserstoff oder Sulfo bedeutet;

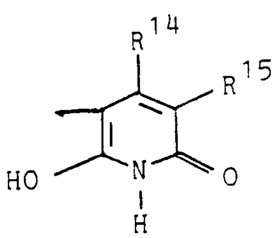

(2e)

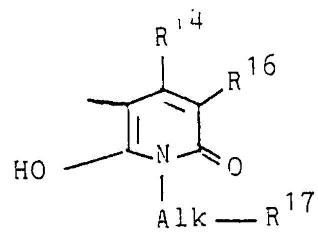

(2f)

in welchen $R^{14}$ Wasserstoff, Alkyl mit 1 bis 4 C-Atomen, davon vorzugsweise Methyl oder Phenyl, $R^{15}$ Wasserstoff, Chlor, Brom, Sulfo, Cyano, Carbamoyl, Sulfamoyl oder Carboxy, vorzugsweise Wasserstoff oder Carbamoyl, $R^{16}$ Wasserstoff, Chlor, Brom, Sulfo, Cyano, Carbamoyl, Sulfamoyl oder Carboxy, vorzugsweise Wasserstoff oder Carbamoyl, und $R^{17}$ Hvdroxy, Sulfo, Sulfato, Amino, Alkylamino mit 1 bis 4 C-Atomen, Dialkylamino, wobei jede Alkylgruppe 1 bis 4 C-Atome aufweist, Chlor oder Alkoxy mit 1 bis 4 C-Atomen, vorzugsweise Methoxy oder Sulfo, bedeuten;

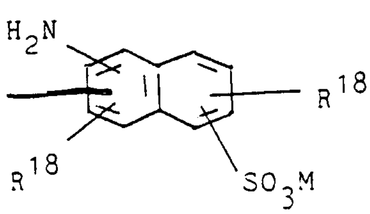

(2g)

in welcher sich die freie Bindung in o- oder p-Stellung in bezug auf die Aminogruppe befindet, $R^{18}$ jedes unabhängig ausgewählt ist aus Wasserstoff und Sulfo und M wie vorher definiert ist; oder die 1:1

Kupferkomplex-, 1:2 Cobaltkomplex- oder 1:2 Chromkomplex-Verbindung davon.

**2.** Eine Azozoverbindung nach Anspruch 1, in welcher Y $\beta$-Chloräthyl, 3-Sulfatoäthyl, $\beta$-Phosphatoäthyl oder $\beta$-Thiosulfatoäthyl ist.

**3.** Eine Azoverbindung nach Anspruch 1, in welcher Y $\beta$-Sulfatoäthyl ist.

**4.** Ein Monoazofarbstoff nach mindestens einem der Ansprüche 1 bis 3 der allgemeinen Formel

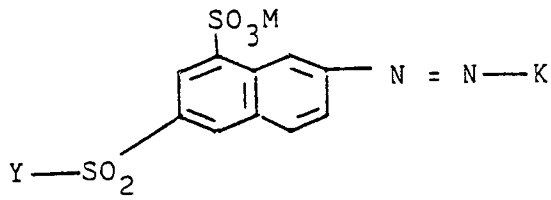

in welcher K 3-Acetylamino-6-sulfo-8-hydroxy-naphth-7-yl oder 3,6-Disulfo-8-hydroxy-naphth-7-yl oder 4-Sulfo-1-hydroxy-naphth-2-yl ist.

**5.** Ein Kupferkomplex-Monoazofarbstoff nach mindestens einem der Ansprüche 1 bis 3 der allgemeinen Formel (1B)

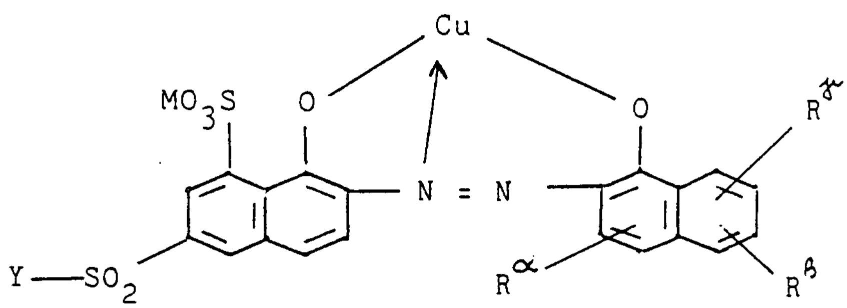

(1B)

in welcher $R^\alpha$ Sulfo in 4-stellung und $R^\beta$ und $R^\gamma$ beide Wasserstoff oder $R^\alpha$ Sulfo in 3-Stellung, $R^\beta$ Sulfo in 6-Stellung und $R^\gamma$ Wasserstoff oder $R^\alpha$ Sulfo in 3-Stellung, $R^\beta$ Sulfo in 6-Stellung und $R^\gamma$ Acetylamino in 8-Stellung ist.

**6.** Verfahren zur Herstellung einer Monoazo- oder Diazoverbindung der in Anspruch 1 angegebenen und definierten Formel (1a) oder (1b), dadurch gekennzeichnet, daß eine Verbindung der allgemeinen Formel (3) oder (4)

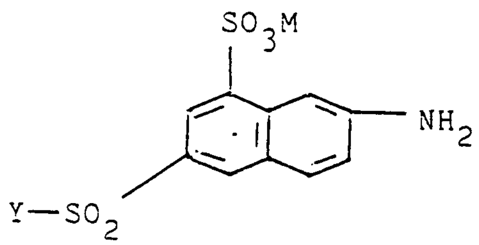

(3)

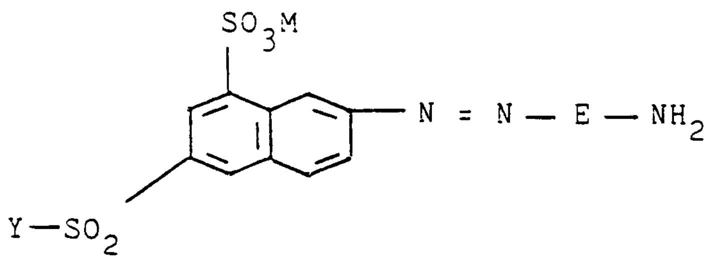

(4)

diazotiert und mit einer Verbindung der allgemeinen Formel H-K, in welcher K wie in Anspruch 1 definiert ist, gekuppelt wird.

7. Verfahren zur Herstellung eines Metallkomplexes, vorzugsweise eines 1:1 Kupferkomplexes, einer Monoazo- oder Diazoverbindung gemäß Anspruch 1, dadurch gekennzeichnet, daß ein metallfreier Monoazo- oder Diazofarbstoff gemäß Anspruch 1 mit einem Metall-Donor Agens, vorzugsweise mit einem Kupfer abgebenden Agens in Gegenwart eines Oxydationsmittels, zur Reaktion gebracht wird.

8. Verwendung einer Azoverbindung nach Anspruch 1 als Farbstoff zum Einfärben oder Bedrucken eines Hydroxy und/oder Carboxamido enthaltenden Fasermaterials.

9. Verfahren zum Einfärben oder Bedrucken eines Hydroxy und/oder Carboxamido enthaltenden Fasermaterials durch Applizieren eines Farbstoffes auf das Material und Fixieren desselben mittels Hitze und/oder mittels eines säurebindenden Agens, dadurch gekennzeichnet, daß der verwendete Farbstoff eine Verbindung gemäß Anspruch 1 ist.

## Revendications

**1.** Colorant monoazoïque et disazoique qui correspnd à la formule générale (1a) ou (1b)

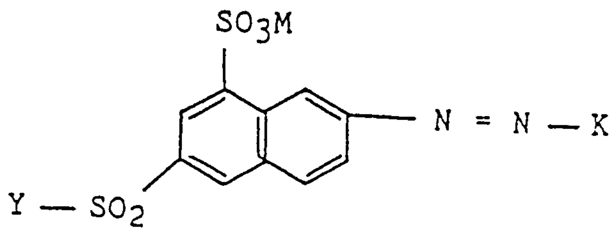

(1a)

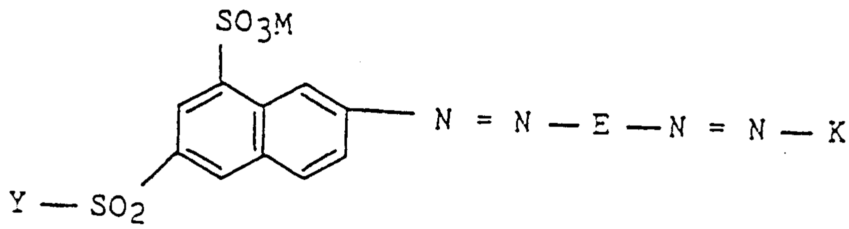

(1b)

dans lesquelles:

M est l'hydrogène ou un métal alcalin;

Y est vinyle ou est un éthyle substitué en position $\beta$ par un substituant organique ou inorganique susceptible d'être séparé à l'aide d'un produit alcalin;

E est 1,4-phénylène ou 1,4-naphtylène éventuellement substitué par un ou deux substituants choisis indépendamment parmi chloro, fluoro, bromo, sulfo, carboxy, alcoxy de 1 à 4 atomes de carbone, alkyle de 1 à 4 atomes de carbone, benzoylamino, sulfobenzoylamino, alcanoylamino de 2 à 5 atomes de carbone et uréido, ou bien E est 2,6- ou 2,7-naphtylène substitué en position 1 par hydroxy et substitué par 1 ou 2 groupes sulfo;

K est un groupe correspondant à l'une des formules générales (2a), (2b), (2c), (2e), (2f) et (2g), définies ci-dessous:

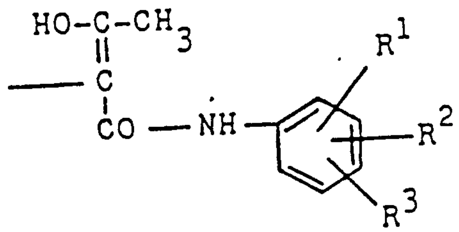

(2a)

dans laquelle

$R^1$ est hydroxy, chloro, bromo, alkyle de 1 à 4 atomes de carbone, alcoxy de 1 à 4 atomes de carbone, sulfo ou un groupe $-SO_2$-Y où Y a l'une des significations données ci-dessus,

$R^2$ est chloro, alkyle de 1 à 4 atomes de carbone, alcoxy de 1 à 4 atomes de carbone ou sulfo, et

$R^3$ est chloro, alkyle de 1 à 4 atomes de carbone, alcoxy de 1 à 4 atomes de carbone ou sulfo,

$R^1$, $R^2$ et $R^3$ ayant des significations qui peuvent être identiques ou différentes l'une de l'autre;

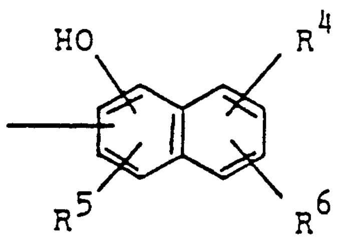

(2b)

dans laquelle

la liaison libre est en position ortho par rapport au groupe hydroxy,

$R^4$ est hydrogène, alkyle de 1 à 4 atomes de carbone, alcoxy de 1 à 4 atomes de carbone, sulfo, amino, hydroxy, benzoylamino, sulfobenzoylamino, alcanoylamino de 2 à 5 atomes de carbone, N-alkylamino de 1 à 4 atomes de carbone ou 3-phénylamino-5-chloro-s-triazine-1-ylamino, la partie benzène dans le dernier groupe étant éventuellement substituée par sulfo, carboxy, chloro, méthyle, êthyle, méthoxy, éthoxy et/ou nitro, de préference au moins par un groupe sulfo,

$R^5$ est hydrogène ou sulfo et

$R^6$ est hydrogène ou sulfo,

$R^4$, $R^5$ et $R^6$ ayant des significations qui sont identiques ou différentes l'une de l'autre;

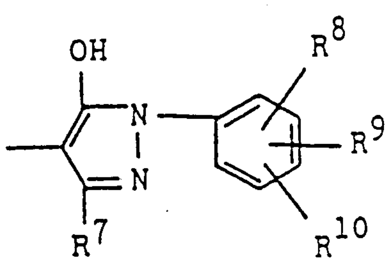

(2c)

dans laquelle

$R^7$ est alkyle de 1 à 4 atomes de carbone, alcoxy de 1 à 4 atomes de carbone, carboxy ou carbalcoxy de 2 à 5 atomes de carbone,

$R^8$ est hydrogène, sulfo, alkyle de 1 à 4 atomes de carbone, alcoxy de 1 à 4 atomes de carbone, chloro, bromo, hydroxy ou $-SO_2-Y$,

$R^9$ est hydrogène, sulfo, alkyle de 1 à 4 atomes de carbone, alcoxy de 1 à 4 atomes de carbone ou chloro, et

$R^{10}$ est hydrogène ou sulfo;

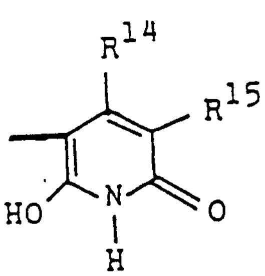

(2e)

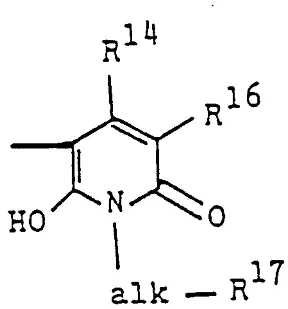

(2f)

dans lesquelles

$R^{14}$ est hydrogène, alkyle de 1 à 4 atomes de carbone, de préférence méthyle, ou est phényle,

$R^{15}$ est hydrogène, chloro, bromo, sulfo, cyano, carbamoyle, sulfamoyle ou carboxy, de préférence hydrogène ou carbamoyle,

$R^{16}$ est hydrogène, chloro, bromo, sulfo, cyano, carbamoyle, sulfamoyle ou carboxy, de préférence hydrogène ou carbamoyle, et

$R^{17}$ est hydroxy, sulfo, sulfato, amino, alkylamino de 1 à 4 atomes de carbone, dialkylamino dont les groupes alkyle ont chacun de 1 à 4 atomes de carbone, chloro ou alcoxy de 1 à 4 atomes de carbone, de préférence méthoxy ou sulfo;

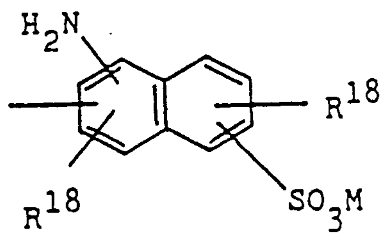

(2g)

dans laquelle

la liaison libre est en position ortho ou para par rapport au groupe amino,

les $R^{18}$ a sont choisis chacun indépendamment parmi hydrogène et sulfo, et

M a la définition donnée ci-dessus;

ou ses dérivés complexes de cuivre 1:1, complexes de cobalt 1:2 ou complexes de chrome 1:2.

**2.** Composé azoïque selon la revendication 1, dans lequel Y est $\beta$-chloroéthyle, $\beta$-sulfatoéthyle, $\beta$-phosphatoéthyle ou $\beta$-thiosulfatoéthyle.

**3.** Composé azoïque selon la revendication 1, dans lequel Y est $\beta$-sulfatoéthyle.

**4.** Colorant monoazoïque selon au moins l'une des revendications 1 à 3, de formule générale

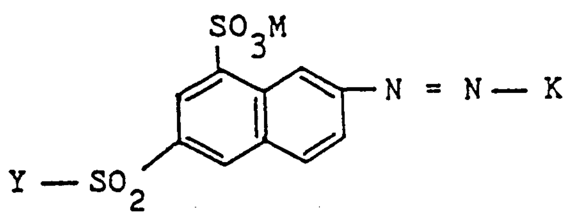

dans laquelle K est 3-acétylamino-6-sulfo-8-hydroxynapht-7-yle ou 3,6-disulfo-8-hydroxynapht-7-yle ou 4-sulfo-1-hydroxynapht-2-yle.

**5.** Colorant monoazoïque complexe de cuivre selon au moins l'une des revendications 1 à 3, de formule générale (1B)

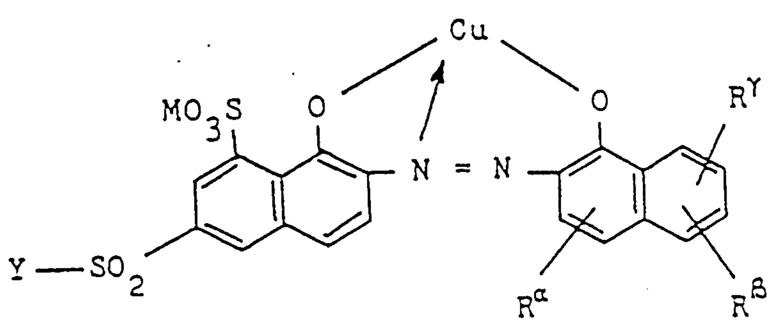

(1B)

dans laquelle

$R^{\alpha}$ est sulfo en position 4, et $R^{\beta}$ et $R^{\gamma}$ sont tous deux hydrogène, ou bien
$R^{\alpha}$ est sulfo en position 3, $R^{\beta}$ est sulfo en position 6 et $R^{\gamma}$ est hydrogène, ou bien
$R^{\alpha}$ est sulfo en position 3, $R^{\beta}$ est sulfo en position 6 et $R^{\gamma}$ est acétylamino en position 8.

**6.** Procédé de préparation d'un composé monoazoïque ou disazoique de formule (1a) ou (1b) mentionné et défini dans la revendication 1, caractérisé en ce qu'on soumet un composé de formule générale (3) ou (4)

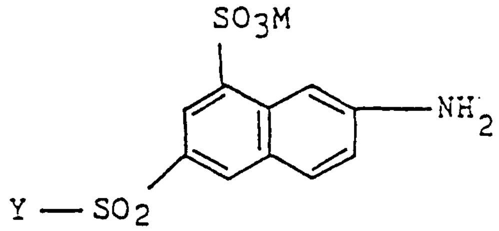

(3)

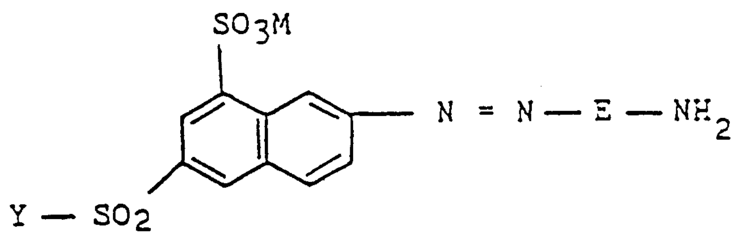

(4)

à une diazotation et à une copulation avec un composé de formule générale H-K dans laquelle K a la définition donnée dans la revendication 1.

**7.** Procédé de préparation d'un complexe métallique, de préférence d'un complexe de cuivre 1:1, d'un composé monoazoïque ou dlsazoique de la revendication 1, caractérisé en ce qu'on fait réagir un colorant monoazoïque ou disazoique de la revendication 1 exempt de métal avec un agent donneur de métal, de préférence avec un agent donnant du cuivre en présence d'un agent d'oxydation.

**8.** Utilisation d'un composé azoïque de la revendication 1 comme colorant pour la teinture ou l'impression d'une matière fibreuse contenant des groupes hydroxy et/ou carboxamido.

**9.** Procédé de teinture ou d'impression d'une matière fibreuse contenant des groupes hydroxy et/ou carboxamido selon lequel on applique un colorant sur la matière et on le fixe à la chaleur et/ou au moyen d'un agent fixateur d'acide, caractérisé en ce que le colorant utilisé est un composé de la revendication 1.